# DEMANDE DE BREVET EUROPEEN

(11) **EP 2 573 614 A1**
(43) Date de publication de la demande: **27.03.2013**
(21) Numéro de dépôt: 12184936.8
(22) Date de dépôt: 19.09.2012
(51) Int. Cl.: G02C 1/08, G02C 5/10

(54) **Lunettes comportant un système unique de fixation du tenon et d'articulation de sa branche**

(30) Priorité: 22.09.2011 FR 1158438
(71) Demandeur: Oxibis Group, 39400 Morbier (FR); Groupement d'Achats des Opticiens Lunetiers - GADOL, 92140 Clamart (FR)
(72) Inventeur: Lamy-Quique, Sylvain, 39220 Premanon (FR); Bovo, Pascal, 39400 Morbier (FR)
(74) Mandataire: Brungard, Yves Francois

(57) **Abrégé**

Lunettes comprenant une façade (2) constituée d'une monture (3) encerclant totalement ou partiellement deux verres optiques ou solaires (4), soutenue par deux branches latérales (5), chacune d'elles étant reliée à la monture (3) par l'intermédiaire, d'une part d'un tenon issu de celle-ci, et d'autre part d'une articulation (7) disposée entre les extrémités en vis-à-vis dudit tenon et de la branche (5), caractérisées en ce que chacun des tenons est constitué, d'une part par une fourche (8), ou serre-cercle, issue d'un cerclage rigide ouvert du verre (4), constitutif de la façade (2), et d'autre part par l'une des extrémités libres (9a) d'un joint périphérique souple (9) présentant une fenêtre (12) coopérant avec le tenon ainsi formé recevant d'un capot de liaison (13) présentant un doigt de verrouillage central, de section correspondant à la fenêtre (12) du joint (9) et à la fourche (8) du cerclage (2) après assemblage, l'extrémité dudit doigt étant apte à coopérer avec un logement d'extrémité (16) de la branche (5) de la lunette, pour former une charnière par l'intermédiaire d'un axe unique.

## Description

La présente invention concerne des lunettes comprenant une façade constituée d'une monture encerclant totalement ou partiellement deux verres optiques ou solaires, soutenue par deux branches latérales, chacune d'elles étant reliée à la monture par l'intermédiaire, d'une part d'un tenon issu de celle-ci, et d'autre part d'une articulation disposée entre les extrémités en vis-à-vis dudit tenon et de la branche.

Dans les lunettes de ce type, dites lunettes cerclées ou semi-cerclées, des pièces en nombre important sont présentes et doivent être mises en oeuvre pour leur assemblage, afin de réaliser, d'une part, un serre-cercle destiné au serrage des verres par rapport aux zones de cerclage de la façade de la monture, et d'autre part, un tenon issu de cette dernière et devant être relié à la branche.

Ces deux fonctions conduisent, selon l'art antérieur, à mettre en place une première vis de fixation du serre-cercle et une seconde vis d'articulation pour la branche sur le tenon.

Ceci grève non seulement le prix de revient des lunettes en pièces et main d'oeuvre en fabrication, mais également en frais d'intervention sur lesdites lunettes par un opticien.

Selon une première phase de la démarche inventive, il a été recherché un système de montage simple et efficace ne faisant intervenir qu'un seul axe, assurant à lui seul la fonction de serrage du serre-cercle et d'articulation de la branche sur le tenon, tout en sécurisant les verres lors du serrage.

A cet effet, l'invention concerne des lunettes comprenant une façade constituée d'une monture encerclant totalement ou partiellement deux verres optiques ou solaires, soutenue par deux branches latérales, chacune d'elles étant reliée à la monture par l'intermédiaire, d'une part d'un tenon issu de celle-ci, et d'autre part d'une articulation disposée entre les extrémités en vis-à-vis dudit tenon et de la branche.

Ces lunettes se **caractérisent en ce que** chacun des tenons est constitué, d'une part par deux extrémités libres formant une fourche, ou serre-cercle, issue d'un cerclage rigide ouvert du verre, constitutif de la façade, et d'autre part par l'une des extrémités libres d'un joint périphérique souple formant un double drageoir, interposé entre le verre et le cerclage, et présentant une fenêtre dont deux côtés latéraux supérieur et inférieur, parallèles entre eux, correspondent et coopèrent par contact avec les deux branches parallèles de la fourche du cerclage, les parties du tenon ainsi formé étant solidarisées entre elles par l'intermédiaire d'un capot de liaison présentant un évidement interne correspondant aux contours du tenon qui s'y loge, et un doigt de verrouillage central, de section correspondant à la fenêtre du joint et à la fourche du cerclage après assemblage, l'extrémité dudit doigt étant apte à coopérer avec un logement d'extrémité de la branche de la lunette, pour former une charnière par l'intermédiaire d'un axe unique assurant à la fois l'articulation de la branche, le verrouillage du capot de liaison sur le tenon, l'immobilisation du tenon et le serrage du serre-cercle, partie constitutive du tenon, sans moyen intermédiaire.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente en perspective des lunettes selon l'invention, après montage définitif.

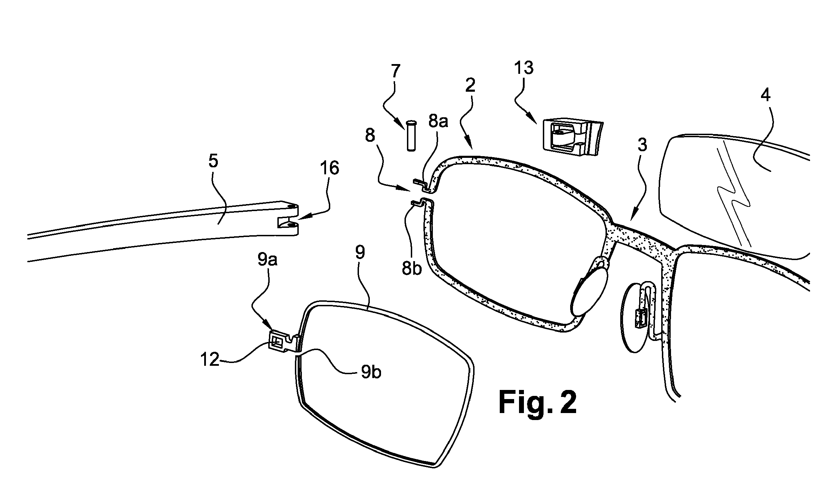

La figure 2 représente une vue en perspective éclatée de toutes les pièces constitutives des lunettes selon la figure 1, avant assemblage.

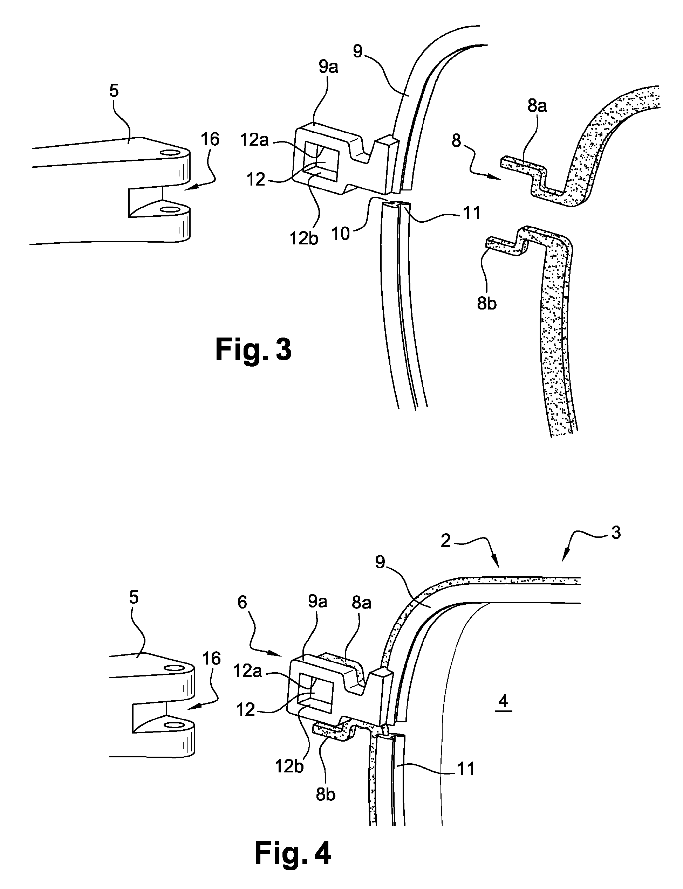

La figure 3 représente, en perspective et à échelle agrandie, le système de fixation du tenon et d'articulation de la branche, objet de l'invention.
La figure 4 représente le système selon la figure 3, après montage du verre dans l'un des drageoirs du joint souple et montage du cerclage rigide formant serre-cercle dans l'autre drageoir.

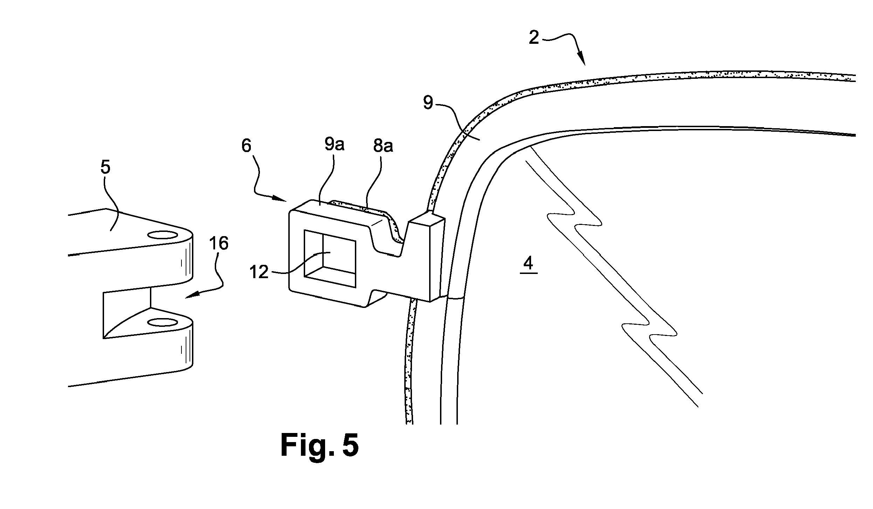

La figure 5 représente le système selon la figure 4, après fermeture des extrémités du joint souple et du serre-cercle.

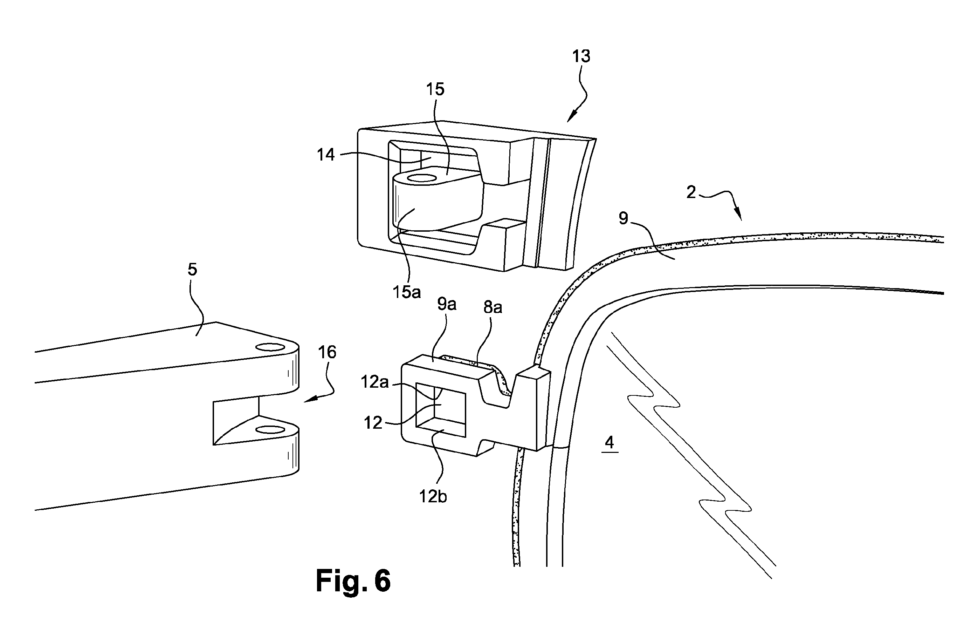

La figure 6 représente le système selon la figure 5 et la présentation du capot de liaison.

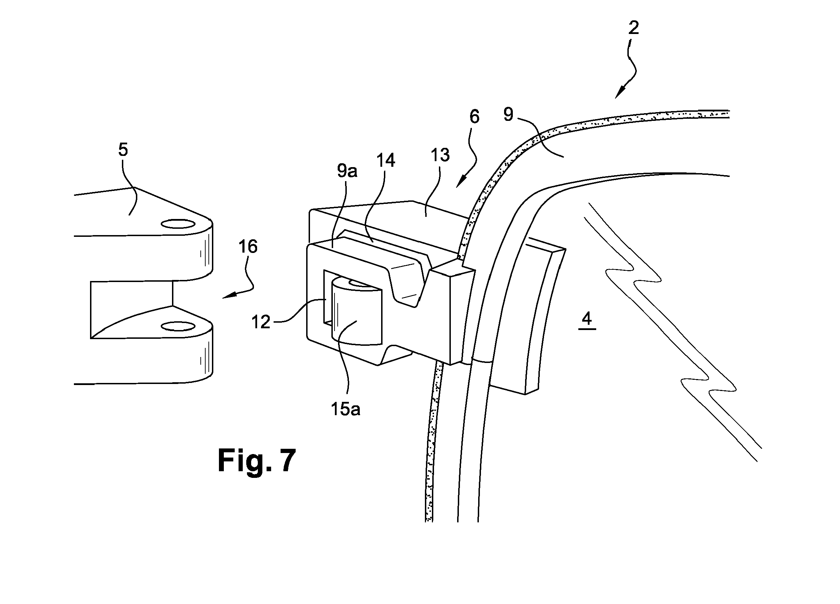

La figure 7 représente le système selon la figure 6, en cours d'engagement du capot de liaison.

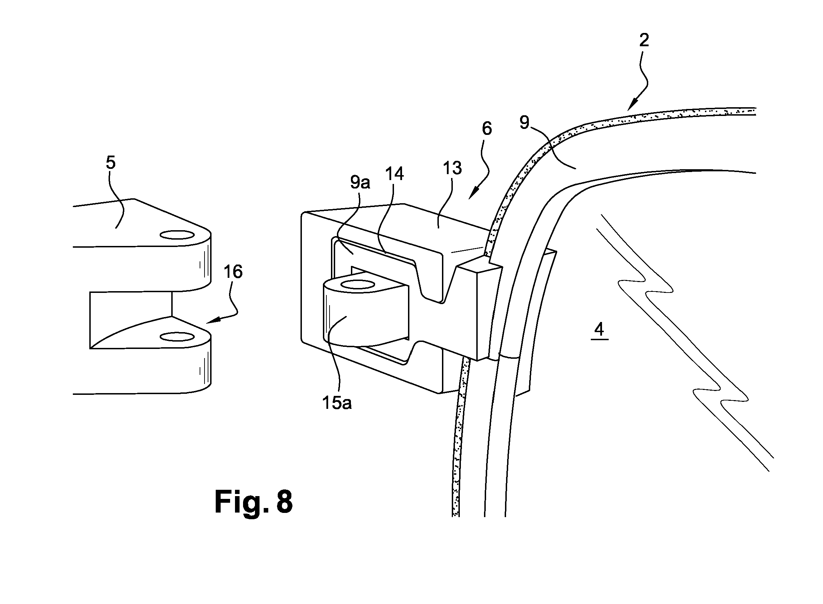

La figure 8 représente le système selon la figure 7, après engagement total du capot de liaison.

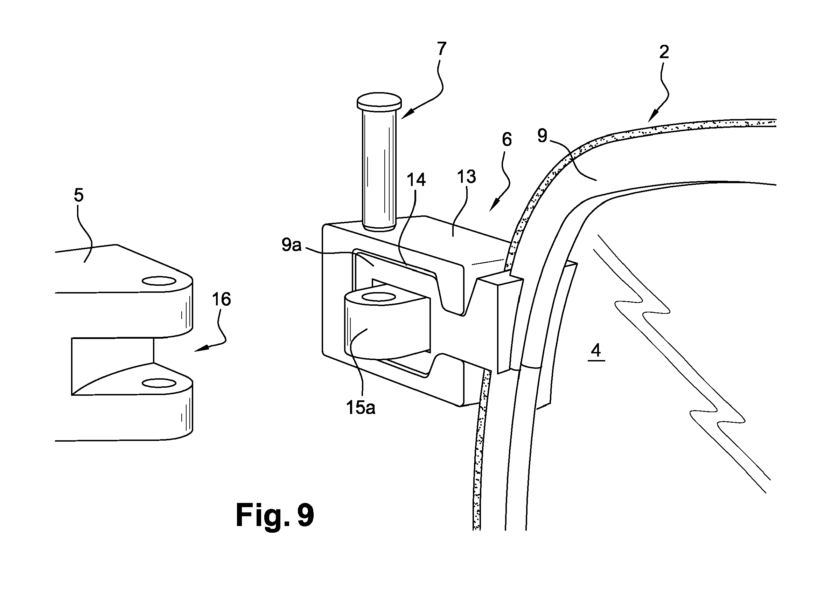

La figure 9 représente le système selon la figure 8 et la présentation d'un axe unique de fixation du tenon et d'articulation de la branche.

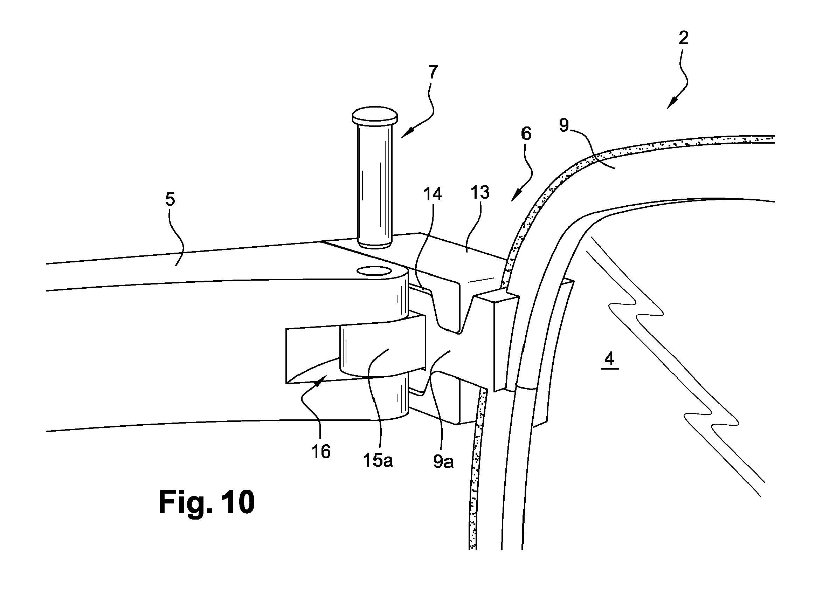

La figure 10 représente le système selon la figure 9, après sa mise en liaison avec la branche.

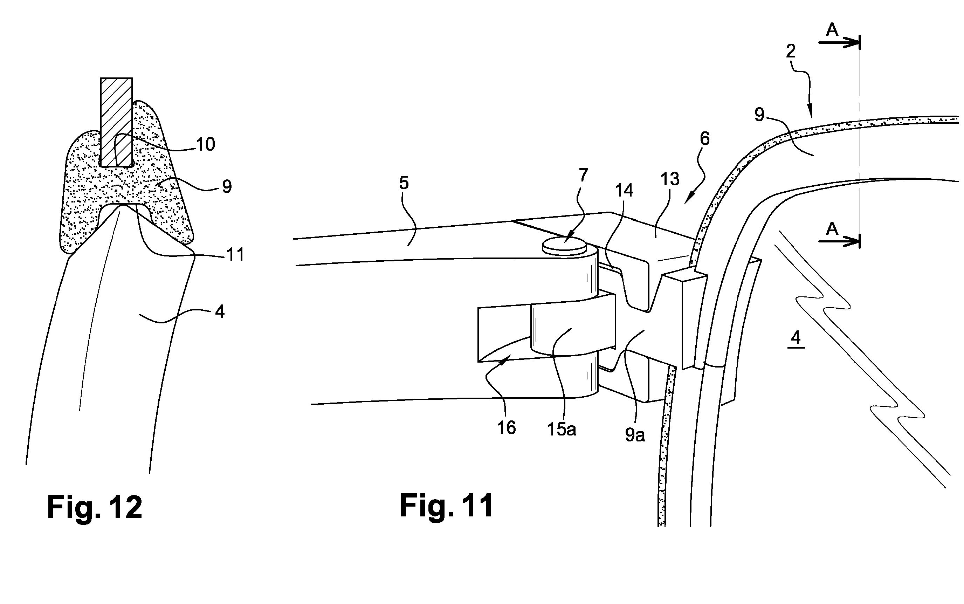

La figure 11 représente l'assemblage définitif du système par rapport à la branche, après mise en place de l'axe unique de fixation du tenon et d'articulation de la branche.
La figure 12 représente en coupe, selon la ligne AA de la figure 11, le joint souple formant un double drageoir.

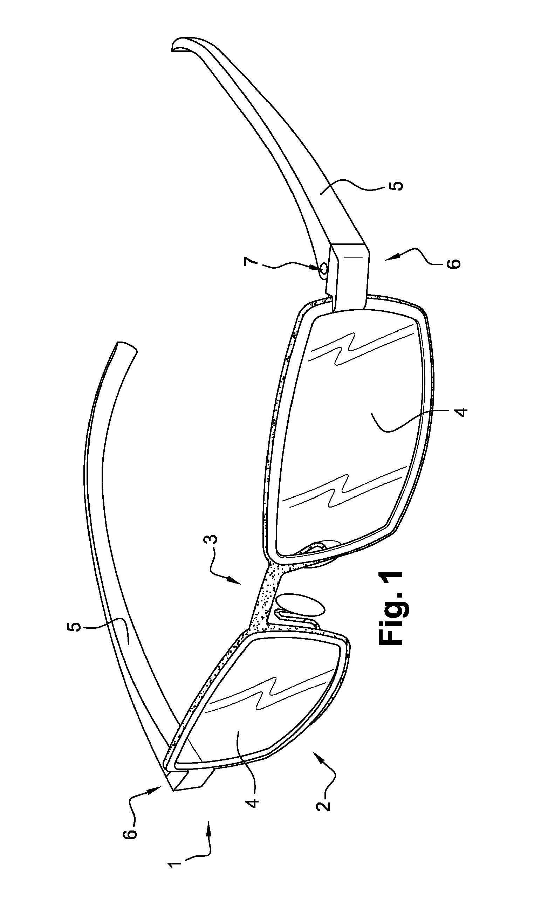

Les lunettes 1 globalement désignées sur la figure 1 comprennent, de manière traditionnelle, une façade 2 constituée d'une monture 3 encerclant totalement ou partiellement deux verres optiques ou solaires 4, soutenue par deux branches latérales 5, chacune d'elles étant reliée à la monture 3 par l'intermédiaire, d'une part d'un tenon 6 issu de celle-ci, et d'autre part d'une articulation 7 disposée entre les extrémités en vis-à-vis dudit tenon 6 et de la branche 5.

Selon l'invention, chacun des tenons 6 est constitué, d'une part par deux extrémités libres 8a,8b formant une fourche 8, ou serre-cercle, issue d'un cerclage rigide ouvert du verre 4, constitutif de la façade 2, et d'autre part par l'une des extrémités libres 9a d'un joint périphérique souple 9.

Le joint 9 forme un double drageoir 10 et 11, interposé entre le verre 4 et le cerclage 2, et présente, à son extrémité 9a, une fenêtre 12 dont deux côtés latéraux supérieur 12a et inférieur 12b, parallèles entre eux, correspondent et coopèrent par contact avec les deux branches 8a,8b parallèles de la fourche 8 du cerclage 2.

Les parties 8a,8b-9a du tenon 6 ainsi formé sont solidarisées entre elles par l'intermédiaire d'un capot de liaison 13.

Celui-ci présente un évidement interne 14 correspondant aux contours du tenon 6 qui s'y loge. Il comporte également un doigt de verrouillage central 15, de section correspondant à la fenêtre 12 du joint 9 et à la fourche 8 du cerclage 2 après assemblage.

L'extrémité 15a dudit doigt 15 est apte à coopérer avec un logement d'extrémité 16 de la branche 5 de la lunette 1, pour former une charnière par l'intermédiaire d'un axe unique 17. Celui-ci assure à la fois la fois l'articulation de la branche 5, le verrouillage du capot de liaison 13 sur le tenon 6, l'immobilisation du tenon 6 et le serrage du serre-cercle 8, partie constitutive du tenon 6, sans moyen intermédiaire.

Le double drageoir 10,11 formé par le joint périphérique souple 9 présente une rainure supérieure 10, recevant le cerclage constitutif de la façade 2, et une rainure inférieure 11, recevant le champ du verre 4, le serrage de cet ensemble étant réalisé par le serre-cercle 8, lors de son montage dans le capot de liaison 13.

La présence du double drageoir en matière souple présente également l'avantage d'éviter le contact direct du cerclage métallique avec le verre qui plus est, doit être rainuré dans ce cas, ce qui a comme inconvénient de le fragiliser.

Préférentiellement, le joint périphérique souple 9 est en matière plastique et le cerclage constitutif de la façade 2 est métallique, l'un et l'autre étant ouvert pour présenter des extrémités libres, respectivement 9a,9b-8a,8b à réunir, par le capot de liaison.

## Revendications

1. Lunettes (1) comprenant une façade (2) constituée d'une monture (3) encerclant totalement ou partiellement deux verres optiques ou solaires (4), soutenue par deux branches latérales (5), chacune d'elles étant reliée à la monture (3) par l'intermédiaire, d'une part d'un tenon (6) issu de celle-ci, et d'autre part d'une articulation (7) disposée entre les extrémités en vis-à-vis dudit tenon (6) et de la branche (5), **caractérisées en ce que** chacun des tenons (6) est constitué, d'une part par deux extrémités libres (8a,8b) formant une fourche (8), ou serre-cercle, issue d'un cerclage rigide ouvert du verre (4), constitutif de la façade (2), et d'autre part par l'une des extrémités libres (9a) d'un joint périphérique souple (9) formant un double drageoir (10 et 11), interposé entre le verre (4) et le cerclage (2), ladite extrémité (9a) présentant une fenêtre (12) dont deux côtés latéraux supérieur (12a) et inférieur (12b), parallèles entre eux, correspondent et coopèrent par contact avec les deux branches (8a,8b) parallèles de la fourche (8) du cerclage (2), les parties (8a,8b-9a) du tenon (6) ainsi formé étant solidarisées entre elles par l'intermédiaire d'un capot de liaison (13) présentant un évidement interne (14) correspondant aux contours du tenon (6) qui s'y loge, et un doigt de verrouillage central (15), de section correspondant à la fenêtre (12) du joint (9) et à la fourche (8) du cerclage (2) après assemblage, l'extrémité (15a) dudit doigt (15) étant apte à coopérer avec un logement d'extrémité (16) de la d'extrémité (16) de la branche (5) de la lunette (1), pour former une charnière par l'intermédiaire d'un axe unique (17) assurant à la fois l'articulation de la branche (5), le verrouillage du capot de liaison (13) sur le tenon (6), l'immobilisation du tenon (6) et le serrage du serre-cercle (8), partie constitutive du tenon (6), sans moyen intermédiaire.

2. Lunettes selon la revendication 1, **caractérisées en ce que** le double drageoir (10,11) formé par le joint périphérique souple (9) présente une rainure supérieure (10), recevant le cerclage constitutif de la façade (2), et une rainure inférieure (11), recevant le champ du verre (4), le serrage de cet ensemble étant réalisé par le serre-cercle (8), lors de son montage dans le capot de liaison (13).

3. Lunettes selon l'une des revendications 1 ou 2, **caractérisées en ce que** le joint périphérique souple (9) est en matière plastique et le cerclage constitutif de la façade (2) est métallique, l'un et l'autre étant ouvert pour présenter des extrémités libres (9a,9b-8a,8b) à réunir, par le capot de liaison.
